(19) Europäisches Patentamt
European Patent Office
Office européen des brevets

(11) **EP 3 412 500 B1**

(12) **FASCICULE DE BREVET EUROPEEN**

(45) Date de publication et mention de la délivrance du brevet:
**05.01.2022 Bulletin 2022/01**

(51) Int Cl.:
***B60L 53/14*** *(2019.01)*   ***B60L 53/20*** *(2019.01)*

(21) Numéro de dépôt: **18187194.8**

(22) Date de dépôt: **10.12.2012**

(54) **PROCÉDÉ D ÉCHANGE D ÉNERGIE ÉLECTRIQUE ENTRE UN RÉSEAU ÉLECTRIQUE VÉHICULANT UNE GRANDEUR ÉLECTRIQUE CONTINUE OU ALTERNATIVE ET UNE UNITÉ DE STOCKAGE D ÉNERGIE ÉLECTRIQUE POUR VÉHICULE HYBRIDE OU ÉLECTRIQUE**

AUSTAUSCHVERFAHREN VON ELEKTRISCHER ENERGIE ZWISCHEN EINEM ELEKTRISCHEN NETZ, IN DEM GROSSE MENGEN AN GLEICH- ODER WECHSELSTROM FLIESSEN, UND EINEM SPEICHER FÜR ELEKTRISCHE ENERGIE FÜR HYBRID- ODER ELEKTROFAHRZEUG

METHOD OF EXCHANGING ELECTRICAL ENERGY BETWEEN AN ELECTRICAL NETWORK CONVEYING A DC OR AC ELECTRICAL QUANTITY AND AN ELECTRICAL ENERGY STORAGE UNIT FOR HYBRID OR ELECTRIC VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.12.2011 FR 1162140**

(43) Date de publication de la demande:
**12.12.2018 Bulletin 2018/50**

(62) Numéro(s) de document de la (des) demande(s) initiale(s) en application de l'article 76 CBE:
**12816703.8 / 2 794 343**

(73) Titulaire: **Valeo Siemens eAutomotive France SAS**
**95800 Cergy (FR)**

(72) Inventeurs:
• **DE SOUSA, Luis**
**95670 Erragny sur Oise (FR)**

• **BOUCHEZ, Boris**
**3057 Solbergelva (NO)**
• **DA COSTA, José-Louis**
**95800 Cergy (FR)**

(74) Mandataire: **Argyma**
**14 Boulevard de Strasbourg**
**31000 Toulouse (FR)**

(56) Documents cités:
CN-A- 101 091 304    DE-A1-102010 054 464
FR-A1- 2 938 711    US-A1- 2010 072 946
US-A1- 2010 237 694    US-A1- 2011 176 343

• **LACROIX S ET AL: "An integrated fast battery charger for Electric Vehicle", VEHICLE POWER AND PROPULSION CONFERENCE (VPPC), 2010 IEEE, IEEE, 1 September 2010 (2010-09-01), pages 1-6, XP031929199, DOI: 10.1109/VPPC.2010.5729063 ISBN: 978-1-4244-8220-7**

**Description**

La présente invention concerne l'échange d'énergie électrique entre un réseau électrique et une unité de stockage d'énergie électrique pour véhicule hybride ou électrique, l'invention concernant notamment la charge de l'unité de stockage d'énergie électrique par le réseau. L'unité de stockage d'énergie électrique est par exemple formée par une ou plusieurs batteries ou encore une ou plusieurs supercapacités, cette unité de stockage d'énergie servant à alimenter le moteur électrique du véhicule.

Le réseau électrique peut être un réseau électrique industriel géré par un opérateur et déployé sur une commune, une région, un Etat ou plusieurs Etats, ou un réseau local et/ou indépendant, notamment privé.

Les véhicules électriques existant possèdent un chargeur intégré permettant la charge de l'unité de stockage d'énergie par un réseau électrique. Les réseaux électriques disponibles sont très différents, pouvant être monophasés, polyphasés (par exemple triphasés), ou continus. Au sein des réseaux monophasés par exemple, des différences de tension existent entre le réseau monophasé aux USA et au Canada qui délivre une tension de 110V ou 220V, le réseau monophasé au Japon qui délivre une tension de 100V et le réseau monophasé en Europe qui délivre une tension de 240V.

Lorsque l'on souhaite effectuer une charge rapide de l'unité de stockage d'énergie, un réseau continu délivre par conducteur un courant bien plus élevé, notamment entre deux et cinq fois plus élevé, que le courant que délivre par conducteur un réseau triphasé.

En raison de toutes ces différences, la possibilité de charger l'unité de stockage d'énergie du véhicule à partir de n'importe quel réseau est difficilement réalisable et nécessite d'embarquer dans le véhicule plusieurs structures dédiées à chaque type de réseau, par exemple un connecteur dédié à chaque type de réseau électrique et/ou des moyens de commutation interposés entre le connecteur et l'unité de stockage d'énergie électrique dédiés à chaque type de réseau.

La charge de l'unité de stockage d'énergie électrique à partir de tout réseau est ainsi coûteuse, complexe et susceptible de générer un encombrement dans le véhicule.

Le document LACROIX S ET AL: "An integrated fast battery charger for Electric Vehicle", VEHICLE POWER AND PROPULSION CONFERENCE (VPPC), 2010 IEEE, IEEE, 1 septembre 2010 (2010-09-01), pages 1-6 décrit un procédé d'échange entre un réseau électrique et une unité de stockage d'énergie électrique d'un véhicule électrique de l'art antérieur.

Il existe un besoin pour permettre un échange d'énergie électrique entre une unité de stockage d'énergie électrique d'un véhicule électrique ou hybride et un réseau électrique de façon simple, peu coûteuse et sans générer d'encombrement.

L'invention a pour but de répondre à tout ou partie de ce besoin et elle y parvient, selon l'un de ses aspects, à l'aide d'un procédé d'échange d'énergie électrique entre, un réseau électrique véhiculant l'une quelconque d'une grandeur électrique d'alimentation continue et d'une grandeur électrique d'alimentation alternative, et une unité de stockage d'énergie électrique pour véhicule hybride ou électrique selon la revendication indépendante 1.

Selon le procédé ci-dessus, le connecteur peut être branché de façon interchangeable à un réseau électrique véhiculant, notamment délivrant, aussi bien une grandeur électrique d'alimentation continue qu'une grandeur électrique d'alimentation alternative et la commande des cellules de commutation est adaptée à cette grandeur électrique. Il en résulte un circuit électrique universel pouvant être branché à tout réseau pour échanger de l'énergie électrique avec celui-ci, notamment pour charger l'unité de stockage d'énergie électrique.

Le circuit électrique peut être embarqué sur le véhicule.

La grandeur électrique d'alimentation véhiculée, notamment délivrée, par le réseau peut être une tension ou un courant.

Chaque cellule de commutation peut être formée par un montage antiparallèle d'un interrupteur commandable et d'une diode. La diode peut ou non être intrinsèque à l'interrupteur commandable. L'interrupteur commandable est notamment un transistor, par exemple un transistor à effet de champ ou un transistor bipolaire ou un transistor de type IGBT. Une telle cellule de commutation est réversible, permettant le passage du courant à travers celle-ci de façon bidirectionnelle. Chaque cellule de commutation peut être formée par un interrupteur à trois segments bidirectionnel en courant.

Le système de commutation peut comprendre une pluralité de bras, notamment six bras, chaque bras ayant au moins deux cellules de commutation commandables.

Chaque inductance peut être interposée entre deux bras du système de commutation. Chaque inductance peut correspondre à une phase électrique du stator du moteur électrique du véhicule.

Le connecteur du circuit peut comprendre une pluralité de contacts principaux ayant chacun une extrémité libre destinée à être branchée à un contact du connecteur, notamment de type complémentaire, du réseau électrique et une autre extrémité reliée à un point intermédiaire d'une des inductances. Par « point intermédiaire d'une inductance », on désigne un point disposé entre les deux extrémités de l'inductance, par exemple un point milieu. Les avantages associés à l'injection de courant depuis le réseau électrique en un point intermédiaire, notamment milieu, de chaque inductance, sont notamment exposés dans la demande WO 2010/057893 au nom de la Déposante. Une telle injection permet notamment de limiter, voire de supprimer, les mouvements du rotor du moteur dont les inductances du stator sont alimentées électriquement lors de la charge de l'unité de stockage d'énergie.

Au sens de la présente demande, « relié » signifie aussi bien « relié directement », c'est-à-dire sans élément intermédiaire que « relié indirectement », c'est-à-dire via un élément intermédiaire.

Le connecteur peut comporter :

- au moins trois contacts principaux, et
- un contact additionnel ayant une extrémité libre destinée à être branchée à la terre du connecteur, notamment de type complémentaire, du réseau électrique et une autre extrémité destinée à être reliée à la carrosserie du véhicule.

Un tel connecteur peut être branché aussi bien à un réseau véhiculant, notamment délivrant, une tension alternative triphasée, à un réseau véhiculant, notamment délivrant, une tension alternative monophasée, à un réseau véhiculant, notamment délivrant, un courant continu et à un réseau véhiculant, notamment délivrant, une tension continue.

Le connecteur du circuit peut ne comprendre que quatre contacts au total pour acheminer le signal électrique du réseau vers l'unité de stockage d'énergie, à savoir trois contacts principaux et un contact additionnel

Dans une variante, le connecteur du circuit peut comprendre quatre contacts principaux, le quatrième contact principal étant dédié au neutre dans le cas d'un signal électrique monophasé délivré par le réseau électrique.

Lorsque le réseau électrique est un réseau véhiculant, notamment délivrant, une tension alternative polyphasée, notamment triphasée, chaque contact principal peut être branché à une phase du réseau électrique et le contact additionnel à la terre du réseau.

Lorsque le réseau électrique est un réseau véhiculant, notamment délivrant, une tension alternative monophasée, un contact principal du connecteur peut être branché à la phase du réseau, un autre contact principal peut être branché au neutre du réseau et le contact additionnel à la terre du réseau.

Qu'il soit branché à un réseau électrique véhiculant, notamment délivrant, une tension monophasée ou polyphasée, notamment triphasée, le système de commutation peut comprendre un convertisseur de tension continue/continue comprenant au moins deux cellules de commutation commandables, ce convertisseur étant survolteur et/ou dévolteur, et les cellules de commutation des bras et/ou les cellules de commutation du convertisseur peuvent être commandées de manière à ce que l'unité de stockage d'énergie reçoive dans le cas d'une charge par le réseau une tension proche de sa tension nominale, notamment comprise entre 200 V et 400 V, à partir de la tension alternative monophasée ou triphasée délivrée par le réseau électrique.

Ce convertisseur peut permettre dans le cas où l'unité de stockage d'énergie électrique transfère de l'énergie au réseau d'adapter à la valeur de la tension du réseau électrique la valeur de tension aux bornes de ladite unité de stockage d'énergie électrique.

Les cellules de commutation peuvent, pour permettre l'échange d'énergie électrique entre l'unité de stockage d'énergie électrique et le réseau lorsque ce dernier présente une tension alternative monophasée ou triphasée, être commandées selon ce qui est décrit dans la publication "A New On Board Fast Battery Charger " International Conference & Exhibition Autmotive Power Electronics April 2011 Proceedings Ref: 2011 -01.

Lorsque le réseau électrique véhicule, notamment délivre, une tension alternative triphasée ou monophasée, le convertisseur de tension continue/continue est par exemple un hacheur série (encore appelé « buck » en anglais).

Lorsque le réseau électrique véhicule, notamment délivre, entre une borne positive et une borne négative, une tension continue ou un courant continu, les branchements du connecteur au réseau peuvent être effectués comme suit:

- deux contacts principaux sont branchés à l'une de la borne positive et de la borne négative du réseau électrique,
- le troisième contact principal est branché à l'autre de la borne positive et de la borne négative du réseau électrique.

Pour obtenir ces branchements, le connecteur, notamment de type complémentaire, du réseau comprend par exemple :

- deux contacts reliés à l'une de la borne positive et de la borne négative du réseau et que l'on branche aux deux contacts principaux du connecteur du circuit, et
- un contact relié à l'autre de la borne positive et de la borne négative du réseau et que l'on branche au troisième contact principal du connecteur du circuit.

Le contact additionnel du connecteur peut être branché à la terre du réseau.

Comme on peut le voir, les contacts principaux peuvent être utilisés pour un branchement à un réseau alternatif triphasé, alternatif monophasé, ou continu.

Dans le cas de la charge de l'unité de stockage d'énergie électrique, lorsque le réseau électrique délivre, entre la borne positive et la borne négative, un courant continu, la commande des cellules de commutation peut être effectuée comme suit :

- les cellules de commutation des bras reliés au(x) contact(s) branché(s) à la borne positive du réseau électrique sont commandées de manière à permettre la circulation de courants du réseau vers l'unité de stockage d'énergie électrique, et
- les cellules de commutation des bras reliés au(x) contact(s) branché(s) à la borne négative du réseau électrique sont commandés de manière à permettre le retour de courants vers le réseau électrique.

Les interrupteurs commandables des cellules de commutation des bras du système de commutation peuvent être maintenus fermés pour permettre l'alimentation électrique de l'unité de stockage d'énergie par le réseau délivrant un courant continu. Dans ce cas, ces interrupteurs jouent le rôle de relais statiques.

Dans un tel cas, le courant continu peut être délivré par le réseau via un poste de charge intégrant une électronique de commande permettant de contrôler le courant chargeant l'unité de stockage d'énergie électrique.

Au sens de la présente demande, « poste de charge » doit être compris de façon large, désignant tout accès au réseau électrique. Il s'agit ainsi aussi bien d'une partie terminale d'un réseau domestique que d'une borne de charge installée dans un lieu publique, à usage gratuit ou payant.

Le système de commutation peut comprendre un bus continu monté en parallèle des bras et un convertisseur de tension continue/continue interposé entre le bus continu et l'unité de stockage d'énergie et comprenant au moins deux cellules de commutation commandables. Le convertisseur a dans cet exemple pour tension d'entrée la tension du bus continu et pour tension de sortie la tension aux bornes de l'unité de stockage d'énergie.

Le bus continu s'étend entre une borne positive et une borne négative et, au sens de la présente demande, la tension du bus continu est la tension entre la borne positive et la borne négative du bus continu.

Lorsque l'on souhaite charger l'unité de stockage d'énergie électrique à l'aide du réseau électrique, le convertisseur a pour tension d'entrée la tension du bus continu et pour tension de sortie la tension aux bornes de l'unité de stockage d'énergie. Dans ce cas, la commande des cellules de commutation des bras et/ou des cellules de commutation du convertisseur de tension continue/continue peut être effectuée pour adapter la valeur de la tension continue délivrée par le réseau à la valeur de tension nominale aux bornes de l'unité de stockage, cette dernière étant notamment comprise entre 200 V et 400 V.

Le convertisseur de tension continue/continue est avantageusement une alimentation à découpage (buck/boost en anglais) pouvant aussi bien fonctionner en survolteur qu'en dévolteur. De cette façon, une valeur de tension convenable peut être fournie à l'unité de stockage d'énergie, en abaissant ou élevant la tension continue délivrée par le réseau électrique.

Le convertisseur de tension est par exemple un hacheur série dévoltant la tension du bus continu. Un fonctionnement en mode survolteur du système de commutation comprenant un tel hacheur série peut être obtenu à l'aide des cellules de commutation des bras.

Le réseau électrique véhiculant, notamment délivrant, une tension continue peut être un réseau local indépendant, comprenant par exemple une ou plusieurs batteries alimentées par des sources d'énergie telles que des éoliennes, des panneaux solaires, des piles à combustible ou des générateurs d'hydroélectricité.

En variante, le réseau électrique véhiculant, notamment délivrant, une tension continue peut être un réseau industriel, notamment un réseau triphasé, et la tension continue peut être obtenue à l'aide d'un redresseur triphasé.

En variante encore, le réseau électrique peut être un groupe électrogène comprenant une génératrice et un redresseur. La génératrice est par exemple alimentée en énergie fossile comme du gaz, du pétrole ou un biocarburant.

L'invention permet ainsi un échange d'énergie électrique avec un poste de charge véhiculant une tension continue, et notamment une charge par ce poste de charge. De tels postes de charge peuvent être dépourvus d'électronique de contrôle puisque celle du circuit électrique embarqué sur le véhicule est utilisable. Ces postes de charge peuvent ainsi être moins coûteux, ce qui est avantageux pour l'opérateur du réseau électrique.

Au sens de la présente demande, lorsqu'un élément est interposé entre deux autres éléments, cela ne signifie pas nécessairement que ces trois éléments sont disposés les uns à la suite des autres. Des éléments intermédiaires peuvent ou non être disposés entre l'élément en question et les deux autres éléments.

Dans tout ce qui précède, le connecteur du circuit électrique peut en variante n'être adapté qu'à un seul type de connecteur de réseau électrique, par exemple à un connecteur d'un réseau électrique triphasé, et on utilise un adaptateur pour permettre le branchement du connecteur du circuit électrique aux autres types de réseau. Par exemple lorsque le connecteur du circuit électrique n'est adapté qu'à un réseau électrique triphasé, on utilise l'adaptateur pour brancher le connecteur du circuit électrique à un réseau délivrant une tension alternative monophasée, ou à un réseau délivrant un courant continu ou à un réseau délivrant une tension continue. L'adaptateur présente par exemple plusieurs interfaces interchangeables et chaque interface est dédiée à un type de réseau électrique.

L'invention a encore pour objet, selon un autre de ses aspects, un circuit électrique pour l'échange d'énergie électrique entre un réseau électrique et une unité de stockage d'énergie électrique d'un véhicule hybride ou électrique tel que définit par la revendication indépendante 14.

Tout ou partie des caractéristiques mentionnées ci-dessus en rapport avec le procédé de charge s'appliquent seules ou en combinaison au circuit électrique ci-dessus.

En particulier :

- le système de commutation peut comprendre une pluralité de bras, notamment six bras, comprenant chacun au moins deux cellules de commutation commandables, et/ou

- chaque inductance peut être interposée entre deux bras du système de commutation, et/ou
- chaque inductance peut correspondre à une phase électrique du stator du moteur électrique du véhicule, et/ou
- le connecteur peut comprendre une pluralité de contacts principaux ayant chacun une extrémité libre destinée à être branchée à un contact du connecteur, notamment de type complémentaire, du réseau électrique et une autre extrémité reliée à un point intermédiaire, notamment milieu, d'une des inductances,
- le connecteur peut être associé à un adaptateur permettant son branchement à l'un quelconque des types de réseau électrique mentionnés précédemment.

L'unité de stockage d'énergie électrique est par exemple une batterie ou plusieurs batteries montées en série et/ou en parallèle. L'unité de stockage d'énergie électrique a par exemple une tension nominale comprise entre 200 V et 400 V.

Les différents aspects de l'invention mentionnés ci-dessus permettent d'obtenir l'un et/ou l'autre des avantages suivants :

- avoir un circuit embarqué pour échanger de l'énergie électrique entre un réseau électrique et une unité de stockage d'énergie électrique alimentant un moteur électrique de véhicule dont l'interface électrique et logique est universelle (prise, pin de puissance, pin de signal), que le réseau électrique véhicule, notamment délivre, une grandeur électrique d'alimentation alternative ou continue,
- avoir un circuit embarqué pour échanger de l'énergie électrique entre un réseau électrique et une unité de stockage d'énergie électrique alimentant un moteur électrique de véhicule pouvant être branché à des réseaux électriques alternatifs et à des réseaux électriques véhiculant, notamment délivrant, un courant continu,
- avoir un circuit embarqué pour échanger de l'énergie électrique entre un réseau électrique et une unité de stockage d'énergie électrique alimentant un moteur électrique de véhicule pouvant être branché à un réseau électrique véhiculant, notamment délivrant, un courant continu ou une tension continue,
- avoir un circuit embarqué pour échanger de l'énergie électrique entre un réseau électrique et une unité de stockage d'énergie électrique alimentant un moteur électrique de véhicule pouvant être branché à un réseau électrique véhiculant, notamment délivrant, un courant continu tout en diminuant la valeur du courant continu véhiculé, notamment délivré, par le réseau afin de réduire les pertes liées au courant.

L'invention pourra être mieux comprise à la lecture de la description qui va suivre d'exemples non limitatifs de mise en œuvre de celle-ci et à l'examen du dessin annexé sur lequel :

- la figure 1 représente de façon très schématique un véhicule électrique et un connecteur d'un circuit selon un exemple de mise en œuvre de l'invention
- la figure 2 représente le véhicule de la figure 1 lorsqu'il est branché à un réseau électrique délivrant une tension triphasée,
- la figure 3 représente le véhicule de la figure 1 lorsqu'il est branché à un réseau électrique délivrant une tension monophasée,
- la figure 4 représente le véhicule de la figure 1 lorsqu'il est branché à un réseau électrique délivrant un courant continu,
- les figures 5 et 6 représentent différentes façons de commander le système de commutation du circuit électrique lorsque le véhicule est branché à un réseau électrique délivrant une tension continue,
- les figures 7 à 9 représentent différents réseaux électriques délivrant une tension continue auxquels le véhicule peut être branché, et
- la figure 10 représente de façon simplifiée l'ensemble formé par le réseau électrique et le circuit électrique du véhicule de la figure 4.

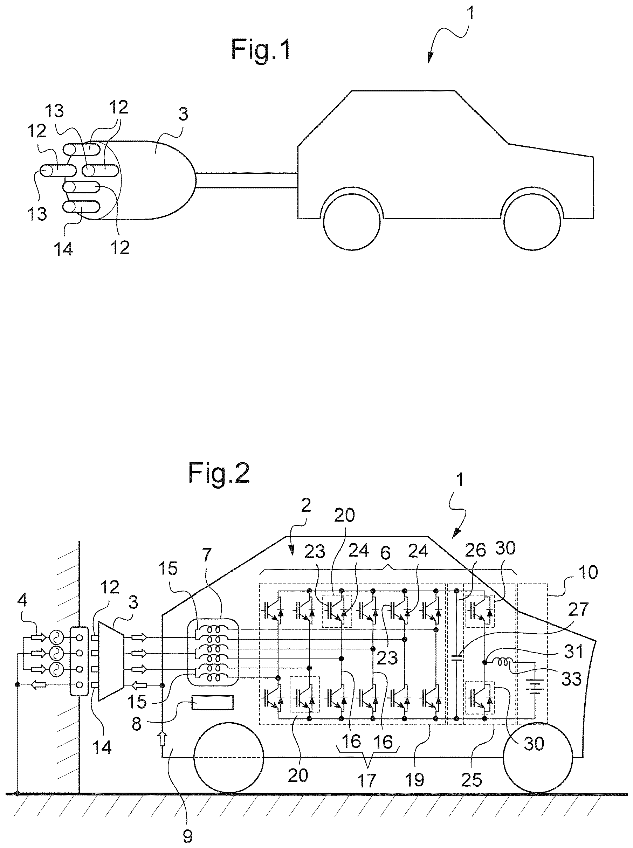

On a représenté à la figure 1 un véhicule 1 dans lequel peut être embarqué un circuit électrique 2 selon un exemple de mise en œuvre de l'invention. Le véhicule 1 est par exemple une automobile à propulsion hybride ou exclusivement électrique.

Un exemple de circuit électrique 2 est représenté sur la figure 2. Comme on peut le voir, ce circuit 2 peut comprendre un connecteur 3 destiné à être branché à un réseau électrique 4 via un connecteur d'un poste de charge en énergie électrique 5, un système de commutation 6, des inductances 7, une unité de commande 8 et une unité de stockage d'énergie électrique 10.

Le réseau électrique 4 est dans cet exemple un réseau triphasé mais l'invention s'applique à des réseaux polyphasés autres que triphasés. Il s'agit par exemple d'un réseau industriel géré par un opérateur et déployé à une échelle régionale, nationale ou internationale. Le réseau délivre par exemple une tension de fréquence égale à 50 Hz ou 60 Hz.

Dans l'exemple de la figure 1, le connecteur 3 comprend cinq contacts. Quatre contacts principaux 12 présentent chacun une extrémité libre 13 visible sur la figure 1 et destinée à être branchée au contact de type complémentaire du connecteur du poste de charge 5. Le cinquième contact 14 du connecteur 3 est relié à la carrosserie 9 du véhicule 1 et destiné à être branché à la terre du réseau électrique 4, comme représenté sur la figure 2.

Comme on peut le voir, chaque contact principal 12 peut avoir une autre extrémité reliée aux inductances 7. Dans l'exemple de la figure 2, cette extrémité est reliée à un point milieu 15 d'une inductance 7, c'est-à-dire que cette liaison avec le contact 12 sépare l'inductance 7 en un nombre exactement égal de spires.

Chacune des inductances 7 est ainsi partagée en deux demi-bobines parcourues par des courants opposés d'une demi-bobine d'une inductance à l'autre demi-bobine de cette même inductance.

Dans l'exemple représenté sur la figure 2, le système de commutation 6 comprend six bras 16. Ces bras 16 sont appariés pour former trois ponts en H 17. Chaque bras 16 comprend dans l'exemple décrit deux cellules de commutation 20 séparées par un point médian 21. Chaque inductance 7 est dans l'exemple considéré interposée entre deux points médians 21 de deux bras 16 d'un pont 17. Ces bras 16 jouent dans l'exemple de la figure 2 le rôle d'un onduleur 19.

Chaque cellule de commutation 20 peut comprendre un montage antiparallèle d'un interrupteur commandable 23 et d'une diode 24. L'interrupteur commandable 23 est par exemple un transistor, notamment un transistor à effet de champ. Les cellules de commutation 20 sont par exemple toutes identiques.

Le système de commutation 6 comprend encore dans l'exemple considéré un convertisseur de tension continue/continue 25 et un bus continu 26 monté en parallèle des bras 16. Un condensateur 27 est disposé dans ce bus continu 26. Le bus continu 26 constitue dans l'exemple de la figure 2 l'entrée du convertisseur 25 qui est un hacheur série réalisant une fonction de dévoltage. La sortie de ce hacheur est formée par l'unité de stockage d'énergie électrique 10. Cette dernière est par exemple une batterie ou une association en parallèle et/ou en série de batteries. L'unité de stockage d'énergie électrique a dans l'exemple considéré une tension nominale comprise entre 200 V et 400 V.

De façon connue, le hacheur série comprend deux cellules de commutation 30 identiques ou non aux cellules de commutation 20 du système de commutation 6 et séparées par un point médian 31. Chacune de ces cellules 30 est dans l'exemple considéré réversible, comprenant en antiparallèle un interrupteur commandable et une diode. Une inductance 33 est interposée entre ce point médian 31 et l'unité de stockage d'énergie 10.

L'unité de commande 8 comporte notamment des moyens de traitement numérique, par exemple un ou plusieurs microcontrôleurs ou un circuit logique programmable. L'unité de commande 8 peut être configurée pour commander les interrupteurs des cellules de commutation 20 et 30 ci-dessus en ouverture et en fermeture de manière à ce que l'unité de stockage d'énergie 10 soit chargée par le réseau électrique 4 auquel est branché le connecteur 3. Dans un souci de clarté du dessin, les liaisons entre l'unité de commande 8 et chaque cellule de commutation 20 ou 30 n'ont pas été représentées.

L'unité de commande 8 peut encore permettre de déterminer si la tension ou le courant délivré par le réseau 4 est continu ou alternatif.

Dans l'exemple de la figure 2, les cellules de commutation 20 et les cellules de commutation 30 sont commandées de manière à ce que la tension alternative triphasée délivrée par le réseau 4 soit convertie en une tension continue de valeur sensiblement égale à la valeur de tension nominale de l'unité de stockage d'énergie 10.

Tous les bras 16 du système de commutation 6 sont par exemple commandés selon une commande PWM afin de réaliser la fonction Power Factor Corrector (PFC) et les courants de charge peuvent être équilibrés entre chaque demi-bobine de chaque inductance 7.

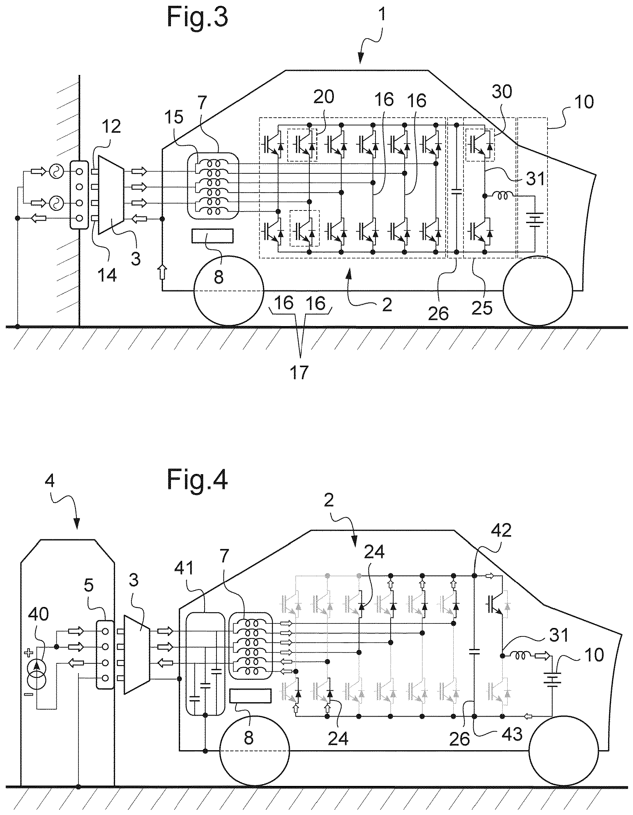

On va maintenant décrire en référence à la figure 3 un autre exemple d'utilisation du circuit 2 décrit en référence à la figure 2. Dans l'exemple de la figure 3, le réseau électrique 4 délivre une tension monophasée. L'un des contacts 12 est branché à la phase du réseau 4 tandis qu'un autre contact 12 est branché au neutre du réseau 4. Lorsque le connecteur 3 comporte quatre contacts principaux 12, le contact principal 12 branché au neutre est distinct des contacts principaux 12 branchés à chaque phase d'un réseau triphasé. Lorsque le connecteur 3 ne comprend que trois contacts principaux 12, l'un de ces derniers, qui est branché à l'une des phases en triphasé, est utilisé pour le branchement au neutre du réseau monophasé.

Dans l'exemple de la figure 3, les cellules de commutation 20 et 30 du système de commutation 6 sont commandées par l'unité de commande 8, le cas échéant après que celle-ci a détecté que le réseau 4 délivre une tension monophasée, de manière à ce que la tension alternative monophasée délivrée par le réseau 4 soit convertie en une tension continue de valeur sensiblement égale à la valeur de tension nominale de l'unité de stockage d'énergie 10.

La commande des cellules de commutation 20 et/ou 30 dans le cas des figures 2 et 3 est par exemple décrite dans la publication déjà citée "A New On Board Fast Battery Charger " International Conférence & Exhibition Autmotive Power Electronics April 2011 Proceedings Ref: 2011 -01

L'exemple de la figure 4 correspond à l'utilisation du circuit 2 pour la charge de l'unité de stockage d'énergie 10 par un réseau 4 délivrant un courant continu. Le poste de charge 5 comprend dans cet exemple une électronique de puissance permettant le contrôle du courant délivré par une source de courant 40 du réseau électrique 4. Dans cet exemple, un filtre aux hautes fréquences 41 formé par des condensateurs montés entre chaque contact principal 12 et la terre peut être ajouté.

Comme représenté sur la figure 4, la borne positive du réseau 4 peut être reliée à deux contacts du connecteur du poste de charge 5 tandis que la borne négative du réseau 4 n'est reliée qu'à un seul contact de ce connecteur. Lors du branchement du connecteur 3 du circuit 2 au poste de charge 5, deux contacts principaux 12 du connecteur 3 sont par exemple branchés aux contacts du connecteur du poste de charge 5 reliés à la borne positive du réseau 4 et un autre contact principal 12 du connecteur est branché au contact du connecteur du poste de charge 5 relié à la borne négative du réseau 4. Le contact additionnel 14 peut être branché à la terre du réseau 4.

Le cas échéant après détection du fait que le réseau 4 délivre un courant continu, l'unité de commande 8, commande les cellules de commutation 20 et 30 pour permettre d'appliquer aux bornes de l'unité de stockage d'énergie 10 la tension adéquate à partir du courant délivré par le réseau 4.

Les interrupteurs commandables des cellules 20 et 30 sont par exemple commandés de manière à ce que les portions représentées en grisé sur la figure 4 ne soient pas parcourues par du courant et de manière à ce que les portions représentées en noir sur cette même figure 4 le soient. Comme on peut le voir, ces buts sont notamment atteints en empêchant le passage du courant dans chaque interrupteur commandable 23 des cellules 20 des ponts en H 17.

Pour chacun des bras 16 connectés à la borne positive du réseau 4, le courant gagne depuis le réseau électrique 4 la borne positive 42 du bus continu 26 par les diodes 24 et, pour chacun des bras 16 connectés à la borne négative du réseau 4, le courant regagne le réseau 4 depuis la borne négative 43 du bus continu 26 par les diodes 24. Pour cela, tous les interrupteurs commandables 23 des ponts 17 sont fermés.

L'interrupteur commandable de la cellule de commutation 30 du convertisseur 26 disposée entre la borne positive 42 du bus continu 26 et le point médian 31 est commandé pour permettre sa traversée par le courant alimentant l'unité de stockage d'énergie 10 tandis que l'interrupteur commandable de la cellule de commutation 30 disposée entre le point médian 31 et la borne négative 43 du bus continu 26 est commandé de manière à ce que cette cellule 30 ne permette pas le passage de courant.

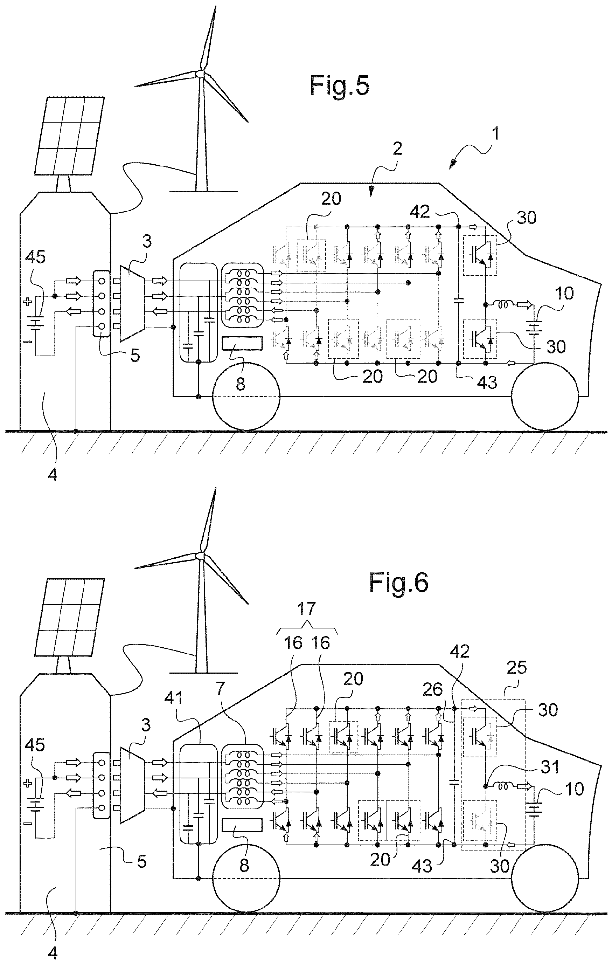

Les figures 5 et 6 correspondent à l'utilisation du circuit 2 pour la charge de l'unité de stockage d'énergie 10 par un réseau 4 délivrant une tension continue. Le poste de charge 5 peut dans ce cas être dépourvu d'électronique de contrôle de courant. Le branchement du connecteur 3 au réseau 4 peut être effectué de la même façon que ce qui a été décrit en référence à la figure 4.

La figure 5 correspond au cas où la valeur de la tension délivrée par la source de tension continue 45 du réseau 4 est supérieure à la valeur nominale de la tension aux bornes de l'unité de stockage d'énergie 10. Dans ce cas, les cellules de commutation 20 et 30 du système de commutation 4 sont commandées de manière à dévolter la tension appliquée par le réseau 4.

Ce but est par exemple atteint en commandant les interrupteurs commandables des cellules 20 et 30 de manière à ce que les portions en grisé du circuit 2 ne soient pas parcourues par un courant et de manière à ce que les portions en noir le soient. Tous les interrupteurs commandables 23 sont par exemple commandés en fermeture.

La figure 6 correspond au cas où la valeur de la tension délivrée par la source de tension continue 45 du réseau 4 est inférieure à la valeur nominale de la tension aux bornes de l'unité de stockage d'énergie 10. Dans ce cas, les cellules de commutation 20 et 30 du système de commutation 4 sont commandées de manière à survolter la tension appliquée par le réseau 4.

Ce but est par exemple atteint en commandant les interrupteurs commandables des cellules 20 et 30 de manière à ce que les portions en grisé du circuit 2 ne soient pas parcourues par un courant et de manière à ce que les portions en noir le soient. La cellule de commutation 30 du convertisseur 25 disposée entre la borne positive 42 du bus continu 26 et le point médian 31 est par exemple commandée de manière à permettre le passage de courant à travers l'interrupteur commandable mais non à travers la diode et l'autre cellule de commutation du convertisseur 25 est commandée de manière à empêcher sa traversée par un courant.

Dans une autre variante, on peut commander les cellules de commutation 20 et 30 du système de commutation pour dévolter et survolter en alternance la tension délivrée par le réseau 4. Une telle commande peut permettre de répondre à des problématiques en termes de régulation ou de résonance entre les inductances 7 et le condensateur 26.

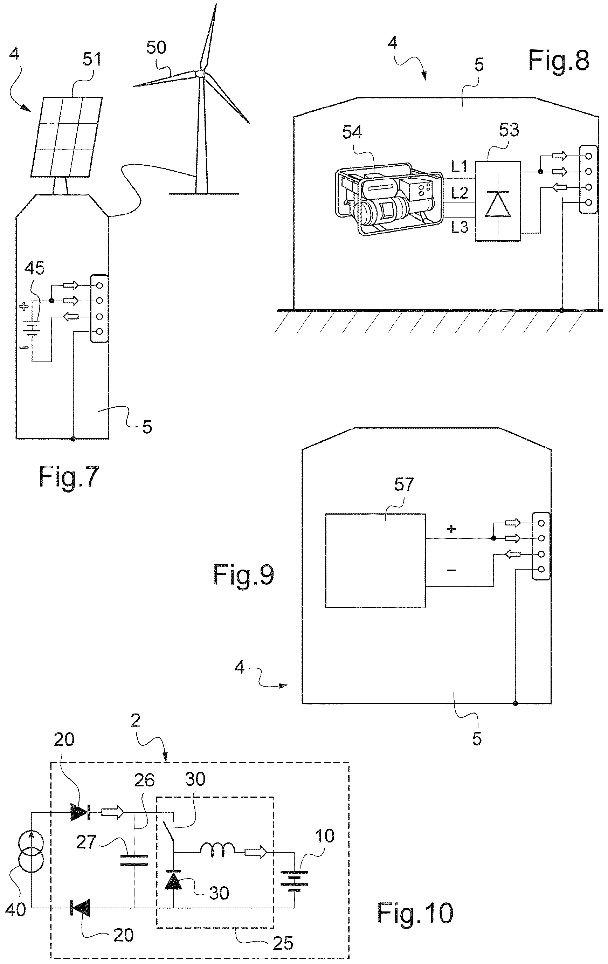

On va maintenant décrire, en référence aux figures 7 à 9 des exemples de réseaux 4 délivrant une tension continue auxquels le connecteur 3 du circuit 2 peut être branché. Il peut s'agir de réseaux locaux et/ou privés comprenant une batterie 45 alimentée par une ou plusieurs sources telles qu'une ou plusieurs éoliennes 50 et/ou un ou plusieurs panneaux solaires 51, comme représenté sur la figure 7.

En variante, la batterie 45 peut être alimentée via un redresseur 53 par une génératrice 54 fonctionnant à l'aide d'énergie fossile, comme du gaz, du pétrole ou un biocarburant, comme représenté sur la figure 8.

En variante encore, la batterie peut être alimentée par d'autres sources, telles que des piles à combustible 57, comme représenté sur la figure 9.

Dans une autre variante non représentée, la source de tension continue 45 correspond à la sortie d'un redresseur triphasé recevant en entrée une tension alternative triphasée délivrée par un réseau électrique industriel.

On va maintenant décrire en référence à la figure 10 un autre aspect de l'invention, pouvant être combiné ou non au circuit universel de charge 2 qui vient d'être décrit en référence aux figures 1 à 9. Comme décrit en référence à la figure 4, l'invention permet d'utiliser le circuit 2 non seulement pour une charge par un réseau triphasé ou monophasé mais également pour une charge par un courant continu, entre autres. Dans ce dernier cas, le poste de charge 5 impose la valeur du courant utilisé pour charger l'unité de stockage d'énergie 10. Le courant délivré par le poste de charge 5 traverse, comme représenté sur la figure 4, des inductances 7 et des interrupteurs des cellules de commutation 20 pour charger l'unité de stockage d'énergie 10.

Du fait de la valeur relativement élevée du courant délivré par le poste de charge 5, des pertes peuvent se produire dans ces cellules de commutation 20 et dans les inductances 7. Diminuer la valeur du courant délivré par le réseau électrique 4 est souhaitable mais cette diminution ne doit cependant que peu, voire pas, affecter la valeur du courant traversant l'unité de stockage d'énergie électrique 10.

Le circuit équivalent au circuit 2 représenté sur la figure 4 est représenté sur la figure 10.

En négligeant les pertes, et donc en considérant que toute la puissance électrique délivrée par le réseau 4 est transférée à l'unité de stockage d'énergie électrique 10, on obtient l'équation ci-dessous, où $V_{BAT}$ et $I_{BAT}$ désignent respectivement la tension aux bornes de l'unité de stockage d'énergie électrique 10 et le courant parcourant ladite unité de stockage d'énergie électrique 10, et où $V_{DC}$ et $I_{SOURCE}$ désignent respectivement la tension du bus continu 26 et le courant délivré par le réseau continu 4 :

$$I_{SOURCE} = \frac{V_{BAT}}{V_{DC}} I_{BAT}$$

Il ressort de cette équation que la valeur du courant $I_{SOURCE}$ délivré par le réseau 4 est inversement proportionnelle à la valeur de la tension du bus continu 26 $V_{DC}$. En conséquence, on peut contrôler la valeur de ce courant $I_{SOURCE}$ à l'aide de la tension $V_{DC}$.

Le poste de charge 5 est par exemple dimensionné pour supporter entre ses bornes une valeur maximale de tension et la commande par l'unité de commande 8 des cellules de commutation 20 et 30 permet d'élever la valeur de la tension aux bornes du poste de charge 5 pour qu'elle soit proche de cette valeur maximale, sans modifier la valeur de la tension aux bornes de l'unité de stockage d'énergie électrique 10. Pour ce faire, le convertisseur 25 peut fonctionner en dévolteur.

La commande représentée sur la figure 5 pour un réseau 4 délivrant une tension continue de valeur supérieure à la valeur de la tension nominale aux bornes de l'unité de stockage d'énergie électrique 10 peut ainsi être appliquée dans le cas où le circuit 2 est chargé par un réseau 4 délivrant un courant continu dont on souhaite réduire la valeur.

Dans le cas présent, afin de réduire les pertes dans les interrupteurs des cellules de commutation 20 et dans les inductances 7, comme mentionné ci-dessus, l'unité de commande 8 peut, après avoir détecté que le réseau 4 délivre un courant continu ou après avoir reçu cette information, commander les cellules de commutation 20 et 30 de manière à diminuer la valeur du courant $I_{SOURCE}$ en amont du bus continu 26 en augmentant la tension $V_{DC}$ du bus continu 26 et la tension aux bornes du poste de charge 5.

A titre d'exemple, avec une unité de stockage d'énergie 10 ayant une tension nominale de l'ordre de 240 Vdc et absorbant un courant de 100A, la commande des cellules de commutation 20 et 30 selon ce qui a été décrit en référence à la figure 4 fait que chaque diode 24 d'une cellule de commutation 20 d'un bras 16 et chaque demi-bobine d'une inductance 7 est parcourue par un courant retournant vers le réseau 4 dont la valeur est de 50A. En considérant une chute de tension aux bornes de chaque diode de l'ordre de 2V et une résistance de 0,1Ω pour chaque demi-bobine, les pertes sont respectivement de 100W et de 250W par diode et par demi-bobine.

En commandant les cellules de commutation 20 et 30 comme représenté sur la figure 5, pour augmenter la tension du bus continu 26 à une valeur proche de 500 Vdc, la valeur du courant délivré par le réseau 4 est abaissée à 48 A, conformément à l'équation ci-dessus.

Chaque diode et chaque demi-bobine par lesquelles s'effectue le retour de courant de l'unité de stockage d'énergie 10 vers le réseau 4 est alors parcourue par un courant de 24 A, ce qui correspond respectivement à des pertes de 48 W et de 58 W.

Cet aspect de l'invention permet ainsi de modifier la valeur du courant $I_{SOURCE}$ délivré par le poste de charge 5, sans que cette modification ne se fasse à l'initiative du poste de charge 5.

L'invention n'est pas limitée aux exemples qui viennent d'être décrits. En particulier, l'échange d'énergie électrique depuis l'unité de stockage d'énergie 10 vers le réseau 4 est possible.

L'invention permet notamment de disposer d'un circuit électrique 2 permettant à la fois l'alimentation d'un moteur électrique pour la propulsion d'un véhicule à partir d'une unité de stockage d'énergie électrique et la charge de cette unité de stockage d'énergie électrique à partir de l'un quelconque des réseaux électriques suivants :

- un réseau alternatif monophasé délivrant une tension comprise entre 100 Vac et 240 Vac, par exemple 120 Vac, à des fréquences comprises entre 45 Hz et 65 Hz,

- un réseau alternatif triphasé délivrant une tension comprise entre 208 Vac et 400 Vac, à des fréquences comprises entre 45 Hz et 65 Hz,

- un réseau continu délivrant une tension supérieure à 200 Vdc, par exemple comprise entre 200 et 400 Vdc.

L'expression "comportant un" doit être comprise comme signifiant « comportant au moins un », sauf lorsque le contraire est spécifié.

**Revendications**

1. Procédé d'échange d'énergie électrique entre un réseau électrique (4) véhiculant un courant continu ou alternatif et une unité de stockage d'énergie électrique (10) d'un véhicule hybride ou électrique (1), l'unité de stockage (10) faisant partie d'un circuit électrique (2) comprenant en outre :

   - un connecteur (3) destiné à être branché à un connecteur du réseau électrique (4),
   - un bus continu (26) interposé entre le connecteur (3) et l'unité de stockage d'énergie électrique (10), le bus continu (26) comprenant un condensateur (27),
   - un convertisseur de tension continue/continue (25) interposé entre le bus continu (26) et l'unité de stockage d'énergie (10),
   - une pluralité d'inductances (7), et
   - un système de commutation (6) comprenant une pluralité de cellules de commutation commandables (20 ; 30) ;

   le procédé comportant :

   - l'étape selon laquelle on commande les cellules de commutation (20 ; 30) en fonction de ce que la grandeur électrique d'alimentation véhiculée par le réseau électrique (4) est continue ou alternative, pour permettre l'échange d'énergie électrique entre l'unité de stockage d'énergie électrique (10) et le réseau électrique (4),
   - l'étape selon laquelle on commande les cellules de commutation (20 ; 30) pour dévolter et survolter en alternance la valeur de tension délivrée par le réseau électrique (4),
   - l'étape selon laquelle on commande le convertisseur de tension continue/continue (25) de manière à augmenter ou à diminuer la valeur de tension du bus continu (26) sans modifier la valeur de la tension aux bornes de l'unité de stockage d'énergie (10).

2. Procédé selon la revendication 1, comportant l'étape préalable selon laquelle on branche le réseau électrique au circuit électrique, une tension de valeur donnée existant aux bornes du réseau électrique, puis l'étape selon laquelle on commande le convertisseur de tension continue/continue de manière à ce que la tension aux bornes du réseau électrique ait une valeur supérieure ou inférieure à ladite valeur donnée, sans modifier la valeur de la tension aux bornes de l'unité de stockage d'énergie électrique.

3. Procédé selon l'une quelconque des revendications précédentes, dans lequel le connecteur est branché sur un poste de charge délivrant le courant continu, ledit poste de charge présentant entre ses bornes une valeur de tension maximale admissible.

4. Procédé selon la revendication précédente, dans lequel le convertisseur de tension continue/continue est commandé de manière à ce que la tension aux bornes du poste de charge soit proche de la valeur de tension maximale admissible.

5. Procédé selon l'une quelconque des revendications précédentes, dans lequel le convertisseur de tension continue/continue (25) est une alimentation à découpage.

6. Procédé selon la revendication précédente, dans lequel le convertisseur de tension continue/continue (25) est un hacheur série.

7. Procédé selon l'une quelconque des revendications précédentes, dans lequel chaque cellule de commutation (20 ; 30) est formée par un montage antiparallèle d'un interrupteur commandable (23) et d'une diode (24).

8. Procédé selon l'une quelconque des revendications précédentes, dans lequel le système de commutation (6) comporte une pluralité de bras (16) ayant chacun au moins deux cellules de commutation commandables (20), dans lequel chaque inductance (7) est interposée entre deux desdits bras (16) et dans lequel le bus continu (26) étant monté en parallèle des bras (16).

9. Procédé selon la revendication 8, dans lequel le connecteur (3) comprend une pluralité de contacts principaux (12) ayant chacun une extrémité libre (13) destinée à être branchée à un contact du connecteur du réseau électrique (4) et une autre extrémité reliée à un point intermédiaire (15) d'une des inductances (7).

10. Procédé selon la revendication 9, dans lequel le connecteur (3) comporte au moins trois contacts principaux (12) et un contact additionnel (14) ayant une extrémité libre destinée à être branchée à la terre du connecteur du réseau électrique (4) et une autre extrémité destinée à être reliée à la carrosserie (9) du véhicule (1).

11. Procédé selon la revendication 10, dans lequel le réseau électrique (4) véhicule, entre une borne positive et une borne négative, une tension continue ou un courant continu et dans lequel on branche :

   - deux contacts principaux (12) à l'une de la borne positive et de la borne négative,
   - le troisième contact principal (12) à l'autre de la borne positive et de la borne négative.

**12.** Procédé selon la revendication 11, dans lequel le réseau électrique (4) véhicule, entre la borne positive et la borne négative, un courant continu, et dans lequel :

- les cellules de commutation (20) des bras (16) reliés au(x) contact(s) (12) branché(s) à la borne positive du réseau électrique (4) sont commandées de manière à permettre la circulation de courants du réseau (4) vers l'unité de stockage (10), et
- les cellules de commutation (20) des bras (16) reliés au(x) contact(s) (12) branché(s) à la borne négative du réseau électrique (4) sont commandées de manière à permettre le retour de courants vers le réseau électrique (4).

**13.** Procédé selon la revendication 12, dans lequel, le convertisseur de tension continue/continue (25) comprenant au moins deux cellules de commutation (30) et la tension aux bornes de l'unité de stockage d'énergie (10) restant constante, on commande les cellules de commutation (20) des bras (16) et/ou les cellules de commutation (30) du convertisseur de tension continue/continue (25) de manière à augmenter la valeur de la tension du bus continu (26).

**14.** Circuit électrique (2) pour l'échange d'énergie électrique entre un réseau électrique (4) véhiculant un courant continu ou alternatif et une unité de stockage d'énergie électrique (10) d'un véhicule hybride ou électrique (1), comprenant :

un connecteur (3) destiné à être branché à un connecteur du réseau électrique (4),

- un bus continu (26) interposé entre le connecteur (3) et l'unité de stockage d'énergie électrique (10), le bus continu (26) comprenant un condensateur (27),
- une pluralité d'inductances (7), et
- un système de commutation (6) comprenant une pluralité de cellules de commutation commandables (20 ; 30) ;
- un convertisseur de tension continue/continue (25) interposé entre le bus continu (26) et l'unité de stockage d'énergie (10),
- une unité de commande (8) configurée pour :
- commander les cellules de commutation (20 ; 30) en fonction de ce que la grandeur électrique d'alimentation véhiculée par le réseau électrique (4) est continue ou alternative, pour permettre l'échange d'énergie électrique entre l'unité de stockage d'énergie électrique (10) et le réseau électrique (4),
- commander les cellules de commutation (20 ; 30) pour dévolter et survolter en alternance la valeur de tension délivrée par le réseau électrique (4),

- commander le convertisseur de tension continue/continue (25) de manière à augmenter ou à diminuer la valeur de tension du bus continu (26) sans modifier la valeur de la tension aux bornes de l'unité de stockage d'énergie (10).

**Patentansprüche**

**1.** Verfahren zum Austausch elektrischer Energie zwischen einem einen Gleichstrom oder einen Wechselstrom transportierenden Stromnetz (4) und einer Speichereinheit elektrischer Energie (10) eines Hybrid- oder Elektrofahrzeugs (1), wobei die Speichereinheit (10) Teil eines Stromkreises (2) ist, der außerdem enthält:

- einen Verbinder (3), der dazu bestimmt ist, an einen Verbinder des Stromnetzes (4) angeschlossen zu werden,
- einen Gleichstrombus (26), der zwischen den Verbinder (3) und die Speichereinheit elektrischer Energie (10) eingefügt ist, wobei der Gleichstrombus (26) einen Kondensator (27) enthält,
- einen DC-DC-Wandler (25), der zwischen den Gleichstrombus (26) und die Energiespeichereinheit (10) eingefügt ist,
- eine Vielzahl von Drosselspulen (7), und
- ein Schaltsystem (6), das eine Vielzahl steuerbarer Schaltzellen (20; 30) enthält;

wobei das Verfahren aufweist:

- den Schritt, gemäß dem die Schaltzellen (20; 30) abhängig davon gesteuert werden, ob die vom Stromnetz (4) transportierte elektrische Versorgungsgröße eine Gleichgröße oder eine Wechselgröße ist, um den Austausch elektrischer Energie zwischen der Speichereinheit elektrischer Energie (10) und dem Stromnetz (4) zu ermöglichen,
- den Schritt, gemäß dem die Schaltzellen (20; 30) gesteuert werden, um den vom Stromnetz (4) gelieferten Spannungswert abwechselnd herabzusetzen und zu erhöhen,
- den Schritt, gemäß dem der DC-DC-Wandler (25) gesteuert wird, um den Spannungswert des Gleichstrombusses (26) zu erhöhen oder zu verringern, ohne den Wert der Spannung an den Klemmen der Energiespeichereinheit (10) zu verändern.

**2.** Verfahren nach Anspruch 1, das den vorhergehenden Schritt, gemäß dem das Stromnetz an den Stromkreis angeschlossen wird, wobei eine Spannung eines gegebenen Werts an den Klemmen des Stromnetzes existiert, dann den Schritt aufweist, gemäß dem der DC-DC-Wandler so gesteuert wird, dass die Spannung an den Klemmen des Stromnetzes einen höheren oder geringeren Wert als der gegebene Wert hat, ohne den Wert der Spannung an den Klemmen der Speichereinheit elektrischer Energie zu verändern.

3. Verfahren nach einem der vorhergehenden Ansprüche, wobei der Verbinder an eine den Gleichstrom liefernde Ladestation angeschlossen ist, wobei die Ladestation zwischen ihren Klemmen einen zulässigen maximalen Spannungswert aufweist.

4. Verfahren nach dem vorhergehenden Anspruch, wobei der DC-DC-Wandler so gesteuert wird, dass die Spannung an den Klemmen der Ladestation nahe dem zulässigen maximalen Spannungswert ist.

5. Verfahren nach einem der vorhergehenden Ansprüche, wobei der DC-DC-Wandler (25) ein Schaltnetzteil ist.

6. Verfahren nach dem vorhergehenden Anspruch, wobei der DC-DC-Wandler (25) ein Abwärtswandler ist.

7. Verfahren nach einem der vorhergehenden Ansprüche, wobei jede Schaltzelle (20; 30) durch eine Gegenparallelschaltung eines steuerbaren Schalters (23) und einer Diode (24) gebildet wird.

8. Verfahren nach einem der vorhergehenden Ansprüche, wobei das Schaltsystem (6) eine Vielzahl von Armen (16) aufweist, die je mindestens zwei schaltbare Schaltzellen (20) haben, wobei jede Drosselspule (7) zwischen zwei der Arme (16) eingefügt wird und wobei der Gleichstrombus (26) mit den Armen (16) parallelgeschaltet ist.

9. Verfahren nach Anspruch 8, wobei der Verbinder (3) eine Vielzahl von Hauptkontakten (12) enthält, die je ein freies Ende (13), das dazu bestimmt ist, an einen Kontakt des Verbinders des Stromnetzes (4) angeschlossen zu werden, und ein anderes Ende haben, das mit einem Zwischenpunkt (15) einer der Drosselspulen (7) verbunden ist.

10. Verfahren nach Anspruch 9, wobei der Verbinder (3) mindestens drei Hauptkontakte (12) und einen zusätzlichen Kontakt (14) aufweist, der ein freies Ende, das dazu bestimmt ist, an die Erde des Verbinders des Stromnetzes (4) angeschlossen zu werden, und ein anderes Ende hat, das dazu bestimmt ist, mit der Karosserie (9) des Fahrzeugs (1) verbunden zu werden.

11. Verfahren nach Anspruch 10, wobei das Stromnetz (4) zwischen einer positiven Klemme und einer negativen Klemme eine Gleichspannung oder einen Gleichstrom transportiert, und wobei angeschlossen werden:

    - zwei Hauptkontakte (12) an eine der positiven Klemme und der negativen Klemme,
    - der dritte Hauptkontakt (12) an die andere der positiven Klemme und der negativen Klemme.

12. Verfahren nach Anspruch 11, wobei das Stromnetz (4) zwischen der positiven Klemme und der negativen Klemme einen Gleichstrom transportiert, und wobei:

    - die Schaltzellen (20) der Arme (16), die mit dem(den) Kontakt(en) (12) verbunden sind, der(die) an die positive Klemme des Stromnetzes (4) angeschlossen ist(sind), so gesteuert werden, dass das Fließen von Strömen vom Netz (4) zur Speichereinheit (10) ermöglicht wird, und
    - die Schaltzellen (20) der Arme (16), die mit dem(den) Kontakt(en) (12) verbunden sind, der(die) an die negative Klemme des Stromnetzes (4) angeschlossen ist(sind), so gesteuert werden, dass die Rückkehr der Ströme zum Stromnetz (4) ermöglicht wird.

13. Verfahren nach Anspruch 12, wobei, da der DC-DC-Wandler (25) mindestens zwei Schaltzellen (30) enthält und die Spannung an den Klemmen der Energiespeichereinheit (10) konstant bleibt, die Schaltzellen (20) der Arme (16) und/oder die Schaltzellen (30) des DC-DC-Wandlers (25) gesteuert werden, um den Wert der Spannung des Gleichstrombusses (26) zu erhöhen.

14. Stromkreis (2) zum Austausch elektrischer Energie zwischen einem Stromnetz (4), das einen Gleichstrom oder einen Wechselstrom transportiert, und einer Speichereinheit elektrischer Energie (10) eines Hybrid- oder Elektrofahrzeugs (1), der enthält:

    - einen Verbinder (3), der dazu bestimmt ist, an einen Verbinder des Stromnetzes (4) angeschlossen zu werden,
    - einen Gleichstrombus (26), der zwischen den Verbinder (3) und die Speichereinheit elektrischer Energie (10) eingefügt ist, wobei der Gleichstrombus (26) einen Kondensator (27) enthält,
    - eine Vielzahl von Drosselspulen (7), und
    - ein Schaltsystem (6), das eine Vielzahl steuerbarer Schaltzellen (20; 30) enthält;
    - einen DC-DC-Wandler (25), der zwischen den Gleichstrombus (26) und die Energiespeichereinheit (10) eingefügt ist,
    - eine Steuereinheit (8), die konfiguriert ist:

- die Schaltzellen (20; 30) abhängig davon zu steuern, ob die vom Stromnetz (4) transportierte elektrische Versorgungsgröße eine Gleichgröße oder eine Wechselgröße ist, um den Austausch elektrischer Energie zwischen der Speichereinheit elektrischer Energie (10) und dem Stromnetz (4) zu ermöglichen,

- die Schaltzellen (20; 30) zu steuern, um den vom Stromnetz (4) gelieferten Spannungswert abwechselnd herabzusetzen und zu erhöhen,

- den DC-DC-Wandler (25) so zu steuern, dass der Spannungswert des Gleichstrombusses (26) erhöht oder verringert wird, ohne den Wert der Spannung an den Klemmen der Energiespeichereinheit (10) zu verändern.

**Claims**

1. Method for exchanging electrical energy between an electrical network (4) carrying a DC or AC current and an electrical energy storage unit (10) of a hybrid or electric vehicle (1), the storage unit (10) forming part of an electrical circuit (2), which further comprises:

   - a connector (3) intended to be connected to a connector of the electrical network (4),
   - a DC bus (26) interposed between the connector (3) and the electrical energy storage unit (10), the DC bus (26) comprising a capacitor (27),
   - a DC-to-DC voltage converter (25) interposed between the DC bus (26) and the energy storage unit (10),
   - a plurality of inductors (7), and
   - a switching system (6) comprising a plurality of controllable switching cells (20; 30);

   the method including:

   - the step in which the switching cells (20; 30) are controlled on the basis of whether the electrical power supply quantity carried by the electrical network (4) is a DC quantity or an AC quantity so as to allow electrical energy to be exchanged between the electrical energy storage unit (10) and the electrical network (4),
   - the step in which the switching cells (20; 30) are controlled so as to alternately step down and step up the voltage value delivered by the electrical network (4),
   - the step in which the DC-to-DC voltage converter (25) is controlled so as to increase or decrease the voltage value of the DC bus (26) without changing the value of the voltage across the terminals of the energy storage unit (10).

2. Method according to Claim 1, including the prior step in which the electrical network is connected to the electrical circuit, a voltage of a given value being present across the terminals of the electrical network, and then the step in which the DC-to-DC voltage converter is controlled such that the voltage across the terminals of the electrical network has a value higher or lower than said given value without changing the value of the voltage across the terminals of the electrical energy storage unit.

3. Method according to either one of the preceding claims, wherein the connector is connected to a charging station that delivers the DC current, said charging station having a maximum permissible voltage value across the terminals thereof.

4. Method according to the preceding claim, wherein the DC-to-DC voltage converter is controlled such that the voltage across the terminals of the charging station is close to the maximum permissible voltage value.

5. Method according to any one of the preceding claims, wherein the DC-to-DC voltage converter (25) is a switched-mode power supply.

6. Method according to the preceding claim, wherein the DC-to-DC voltage converter (25) is a series chopper.

7. Method according to any one of the preceding claims, wherein each switching cell (20; 30) is formed by an antiparallel assembly of a controllable switch (23) and a diode (24).

8. Method according to any one of the preceding claims, wherein the switching system (6) includes a plurality of arms (16), each of which has at least two controllable switching cells (20), wherein each inductor (7) is interposed between two of said arms (16), and wherein the DC bus (26) is connected in parallel with the arms (16).

9. Method according to Claim 8, wherein the connector (3) comprises a plurality of main contacts (12), each of which has a free end (13), which is intended to be connected to a contact of the connector of the electrical network (4), and another end, which is connected to an intermediate point (15) of one of the inductors (7).

10. Method according to Claim 9, wherein the connector (3) includes at least three main contacts (12) and an additional contact (14), which has a free end, which is intended to be connected to the ground of the connector of the electrical network (4), and another end, which is intended to be connected to the bodywork (9) of the vehicle (1).

11. Method according to Claim 10, wherein the electrical network (4) carries, between a positive terminal and a negative terminal, a DC voltage or a DC current, and in which:

- two main contacts (12) are connected to one of the positive terminal and the negative terminal,
- the third main contact (12) is connected to the other one of the positive terminal and the negative terminal.

12. Method according to Claim 11, wherein the electrical network (4) carries, between the positive terminal and the negative terminal, a DC current, and in which:

- the switching cells (20) of the arms (16) that are connected to the one or more contacts (12) connected to the positive terminal of the electrical network (4) are controlled so as to allow currents to flow from the network (4) to the storage unit (10), and
- the switching cells (20) of the arms (16) that are connected to the one or more contacts (12) connected to the negative terminal of the electrical network (4) are controlled so as to allow currents to return to the electrical network (4).

13. Method according to Claim 12, wherein, with the DC-to-DC voltage converter (25) comprising at least two switching cells (30) and the voltage across the terminals of the energy storage unit (10) remaining constant, the switching cells (20) of the arms (16) and/or the switching cells (30) of the DC-to-DC voltage converter (25) are controlled so as to increase the value of the voltage of the DC bus (26) .

14. Electrical circuit (2) for exchanging electrical energy between an electrical network (4) carrying a DC or AC current and an electrical energy storage unit (10) of a hybrid or electric vehicle (1), comprising:

- a connector (3) intended to be connected to a connector of the electrical network (4),
- a DC bus (26) interposed between the connector (3) and the electrical energy storage unit (10), the DC bus (26) comprising a capacitor (27),
- a plurality of inductors (7) and
- a switching system (6) comprising a plurality of controllable switching cells (20; 30);
- a DC-to-DC voltage converter (25) interposed between the DC bus (26) and the energy storage unit (10),

- a control unit (8) configured to:

- control the switching cells (20; 30) on the basis of whether the electrical power supply quantity carried by the electrical network (4) is a DC quantity or an AC quantity so as to allow electrical energy to be exchanged between the electrical energy storage unit (10) and the electrical network (4),
- control the switching cells (20; 30) so as to alternately step down and step up the voltage value delivered by the electrical network (4),
- control the DC-to-DC voltage converter (25) so as to increase or decrease the voltage value of the DC bus (26) without changing the value of the voltage across the terminals of the energy storage unit (10).

# Fig.1

# Fig.2

Fig.3

Fig.4

## Fig.5

## Fig.6

Fig.7

Fig.8

Fig.9

Fig.10

RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2010057893 A

**Littérature non-brevet citée dans la description**

- An integrated fast battery charger for Electric Vehicle. **LACROIX S et al.** VEHICLE POWER AND PROPULSION CONFERENCE (VPPC). IEEE, 01 Septembre 2010, 1-6

- A New On Board Fast Battery Charger. *International Conference & Exhibition Autmotive Power Electronics,* Avril 2011
- A New On Board Fast Battery Charger. *International Conférence & Exhibition Autmotive Power Electronics,* Avril 2011